# DEMANDE DE BREVET EUROPEEN

(11) **EP 4 016 554 A1**
(43) Date de publication de la demande: **22.06.2022**
(21) Numéro de dépôt: 21306802.6
(22) Date de dépôt: 16.12.2021
(51) Int. Cl.: H01B 13/06, C04B 12/04, H01B 3/14, H01B 7/29

(54) **PROCÉDÉ DE FABRICATION D'UN CÂBLE RÉSISTANT ET/OU RETARDANT AU FEU**

(30) Priorité: 17.12.2020 FR 2013453
(71) Demandeur: Nexans, 92400 Courbevoie (FR)
(72) Inventeur: DAVEAU, Sylvie, 92400 COURBEVOIE (FR); AUVRAY, Thierry, 69006 LYON (FR); GYPPAZ, Franck, 69003 LYON (FR)
(74) Mandataire: Ipsilon

(57) **Abrégé**

La présente invention concerne un procédé de fabrication d'un câble comprenant au moins un élément électriquement conducteur allongé et au moins une couche composite entourant ledit élément électriquement conducteur allongé, ladite couche composite étant obtenue à partir d'un rouleau de matériau fibreux non tissé imprégné par une composition géopolymère.

## Description

La présente invention concerne un procédé de fabrication d'un câble comprenant au moins un élément électriquement conducteur allongé et au moins une couche composite entourant ledit élément électriquement conducteur allongé, ladite couche composite étant obtenue par imprégnation d'un matériau fibreux non tissé par une composition géopolymère.

Elle s'applique typiquement, mais non exclusivement, à des câbles retardants et/ou résistants au feu, destinés au transport d'énergie et/ou à la transmission de donnée tels que des câbles électriques et/ou optiques de sécurité retardants et/ou résistants au feu, notamment sans halogène, susceptibles de fonctionner pendant un laps de temps donné dans des conditions d'incendie sans être pour autant propagateur d'incendie, ni générateur de fumées importantes. Ces câbles de sécurité sont en particulier des câbles de transport d'énergie moyenne tension (notamment de 6 à 45-60 kV) ou des câbles de transmission basse fréquence, tels que des câbles de contrôle ou de signalisation.

De WO 2016/099200 est connu un procédé de fabrication d'un câble résistant au feu comprenant les étapes suivantes : une étape de préparation d'une composition géopolymère comprenant un silicate de sodium, de l'eau, de l'hydroxyde de potassium, un aluminosilicate, et des fibres de polypropylène ; une étape d'enroulement d'un ruban de papier non tissé autour d'un assemblage de conducteurs en cuivre, une étape d'imprégnation par trempage enduction de l'assemblage conducteurs en cuivre/ruban de papier non tissé, dans la composition géopolymère précédemment préparée, pour former une couche composite entourant les conducteurs en cuivre, puis une étape d'extrusion à chaud d'une gaine protectrice polymère. Le procédé est long, notamment du fait de l'étape de séchage, et il ne peut être réalisé en continu. Par ailleurs, les éléments constitutifs du câble à proximité de la couche composite à base d'un matériau géopolymère peuvent être facilement contaminés par la composition géopolymère.

Un but de l'invention est de pallier tout ou partie des inconvénients précités, et de fournir un procédé de fabrication d'un câble retardant au feu ledit procédé qui soit facile à mettre en œuvre, et notamment facilement industrialisable, économique et rapide, et permettant de conduire à un câble présentant de bonnes propriétés mécaniques, notamment en termes de flexibilité et de durabilité.

Selon un premier aspect, l'invention a pour objet un procédé de fabrication d'un câble comprenant au moins un élément électriquement conducteur allongé et au moins une couche composite entourant ledit élément électriquement conducteur allongé, caractérisé en ce que la couche composite entourant ledit élément électriquement conducteur allongé est formée en appliquant autour dudit câble comprenant au moins un élément électriquement conducteur allongé un ruban de matériau fibreux imprégné de composition géopolymère,
où ledit ruban imprégné est délivré à partir d'un rouleau (plus usuellement désigné par « bobine » ou « galette ») préparé (*in situ* ou non) selon étapes suivantes :
i) imprégner un ruban de matériau fibreux non tissé avec une composition géopolymère, afin de former un ruban imprégné de ladite composition géopolymère,
ii) traiter thermiquement le ruban imprégné obtenu à l'étape i), afin de former un ruban imprégné et séché partiellement,
iii) former le rouleau en enroulant sur lui-même le ruban imprégné et séché partiellement issu de l'étape (ii).

Le procédé de l'invention comporte ainsi une étape d'application, autour du câble comprenant au moins un élément électriquement conducteur allongé, du ruban qui est délivré à partir du rouleau. Cette étape d'application du ruban depuis le rouleau autour du câble sera désignée ci-après par « étape iv ».

Selon un autre aspect, l'invention a pour objet un rouleau de ruban imprégné et séché partiellement utile dans le procédé de l'invention, et qui peut être obtenu selon les étapes (i) à (iii) précitées. Ce rouleau comporte un ruban de matériau fibreux imprégné avec une composition géopolymère traitée thermiquement et séché partiellement, ledit ruban imprégné et séché partiellement étant enroulé sur lui-même autour d'un axe perpendiculaire à son axe longitudinal.

L'étape ii) est un traitement thermique qui induit une solidification progressive par formation (« prise ») d'un géopolymère à partir de la composition qui imprègne le ruban. Ce traitement est conduit de façon à ce que cette solidification ne soit que partielle, ce qui permet d'obtenir une viscosification de la composition imprégnée et sa transformation en une composition pâteuse qui conserve néanmoins une certaine souplesse au ruban, pour autoriser son déroulement et sa manipulation dans l'étape iv).

Dans la présente description, à des fins de concision, l'étape de traitement thermique ii) est parfois désignée par étape de « séchage » et, de façon similaire, le ruban obtenu sera décrit comme un ruban imprégné et « séché partiellement », bien que l'étape ii) mette en œuvre des processus plus complexe qu'un simple séchage et conduise davantage à une formation du géopolymère qu'à une élimination d'eau. En d'autres termes la notion de « séchage partiel » du ruban imprégné se réfère davantage à une « prise » uniquement partielle de la composition géopolymère.

En pratique, pour éviter une évolution de la prise de la composition géopolymère entre l'étape (iii) et l'étape (iv), on peut avantageusement protéger le ruban dans une enceinte scellée entre les étapes (iii) et (iv). Le rouleau de ruban imprégné et séché partiellement selon l'invention est typiquement fourni dans une enceinte scellée de ce type, par exemple conditionné dans une enveloppe étanche, par exemple un sac plastique scellé hermétiquement.

Au sens de la présente description, le terme de « ruban » désigne une bande déformable ayant, une fois mise à plat, sensiblement la géométrie d'un parallélépipède écrasé et fortement allongé, à savoir avec une épaisseur bien inférieure à sa largeur (typiquement au moins d'un facteur 10), et une largeur elle-même bien inférieure à sa longueur (typiquement au moins d'un facteur 100). Les deux faces opposées du parallélépipède ayant les plus grandes dimensions sont désignés par « faces » de la bande ou du ruban, par opposition aux autres qui en constituent les « tranches » latérales. Un ruban possède un axe de symétrie longitudinal, qui traverse le ruban sur toute sa longueur et qu'on désignera ici par « l'axe longitudinal » du ruban.

Un ruban dit « enroulé sur lui-même » désigne ici un ruban qui est mis en forme en s'enroulant autour d'un axe de façon à ce que l'une de ses faces vienne en regard de sa face opposée (en induisant typiquement un contact direct entre les deux faces : dans le cadre de l'invention, selon des modes de réalisation spécifiques, un film antiadhérent peut être envisagé entre les faces en regard, mais l'usage d'un tel film n'est en général pas souhaitable), et ce avec un taux de recouvrement des deux surfaces en regard qui est typiquement d'au moins 90%, voire d'au moins 95% et de préférence d'au moins 99%. Dans le rouleau utile selon le procédé de l'invention, l'enroulement du ruban sur lui-même est effectué autour d'un axe perpendiculaire à l'axe longitudinal du ruban, à savoir en enroulant le ruban sur lui-même dans le sens de sa longueur, ce par quoi le rouleau obtenu a typiquement sensiblement la forme d'un cylindre dont la hauteur selon la génératrice est sensiblement égale à la largeur du ruban.

L'enroulement du ruban lors de l'étape iii) est de préférence effectué en mettant exactement en regard les faces opposées du ruban, ce par quoi le rouleau a au final la forme d'un cylindre dont la hauteur selon la génératrice est égale à la largeur du ruban, mais des variations dues à des imprécisions de l'enroulement sont envisageables, qui peuvent conduire à une hauteur légèrement plus élevée, qui reste de préférence inférieure à 1,5 fois la largeur du ruban

Le rouleau utile selon l'invention se présente le plus souvent sous la forme d'un ensemble comprenant un support autour duquel le ruban est entouré. Le cas échéant, ce support sert d'axe d'enroulement au rouleau. Ce support, lorsqu'il est présent, a typiquement une longueur supérieure ou égale à la largeur du ruban. Il peut notamment s'agir d'une pièce rigide (telle qu'une âme ou un tambour cylindrique) ayant typiquement la forme d'un cylindre (de préférence de section circulaire, bien que d'autres géométries soient envisageables, dans l'absolu), le ruban étant alors enroulé autour de la génératrice de ce cylindre.

Le procédé de l'invention est rapide, facile à mettre en œuvre, notamment sur le plan industriel, économique, et il garantit l'obtention d'un câble résistant et/ou retardant au feu présentant de bonnes propriétés mécaniques, notamment en termes de flexibilité et de durabilité. Par ailleurs, le procédé de l'invention permet d'éviter la contamination des éléments constitutifs du câble à proximité de la couche composite par la composition géopolymère.

L'emploi spécifique d'un rouleau pour délivrer le ruban imprégné et séché partiellement permet une mise en œuvre d'autant plus aisée du procédé de l'invention. Ce rouleau peut être préparé en amont de l'étape iv), éventuellement sur un autre site que celui de l'étape iv), et stocké sur des périodes de temps importantes et il présente par ailleurs l'avantage de pouvoir être transporté sur de longues distances au besoin (le cas échéant, le rouleau est en général conditionné dans une enveloppe étanche).

La mise en œuvre des étapes i) et ii) permet d'obtenir aisément et rapidement un ruban imprégné et séché partiellement où la quantité de géopolymère déposé est homogène et contrôlée, ce qui permet notamment un enroulement aisé du ruban et l'obtention d'un enroulement de géométrie homogène.

Différents aspects et modes de réalisation possibles de l'invention sont décrits plus en détails ci-après.

### Le matériau fibreux non tissé

Le matériau fibreux non tissé employé selon l'invention, notamment dans l'étape i) et présent dans le rouleau obtenu à l'issue de l'étape iii), a de préférence une structure souple et flexible. Par ailleurs, il est préférable qu'il ait de bonnes propriétés mécaniques de résistance à la traction et au déchirement.

Ce matériau fibreux non tissé peut notamment être choisi parmi les matériaux cellulosiques, les matériaux à base de polymères organiques synthétiques, les fibres de verre, et un de leurs mélanges, et de préférence parmi les matériaux à base de polymères organiques synthétiques.

Les matériaux cellulosiques peuvent être choisis parmi le papier, en particulier le papier buvard ; les matériaux non tissés fabriqués à partir de cellulose fonctionnalisée ou non fonctionnalisée ; les matrices à structure alvéolaire et/ou fibreuse fabriquées à partir de fibres naturelles d'acétate de cellulose.

Les matériaux à base de polymères organiques synthétiques peuvent être choisis parmi les matériaux polymères à matrice poreuse et/ou fibreuse de polyoléfine(s), en particulier ceux choisis parmi les homo- et copolymères de propylène, les homo- et copolymères d'éthylène, les polyéthylènes haute densité (HDPE), les polyamides aromatiques (aramides), les polyesters, et un de leurs mélanges.

Selon une forme de réalisation préférée de l'invention, le matériau fibreux non tissé est un polyéthylène téréphtalate (PET).

Le matériau fibreux non tissé présente de préférence un grammage allant de 50 à 120 g/cm² environ. Cela permet ainsi d'obtenir une couche composite suffisamment flexible pour pouvoir être manipulée facilement, et suffisamment robuste pour assurer des propriétés mécaniques compatibles avec le procédé d'imprégnation et de séchage et pour obtenir, en association avec la composition géopolymère qui y est imprégnée, une bonne protection au feu.

Selon une forme de réalisation préférée de l'invention, le matériau fibreux non tissé représente de 2 à 95% en poids environ, de façon particulièrement préférée de 5 à 45% en poids environ, et encore plus préférentiellement de 10 à 35% en poids environ, par rapport au poids total de la couche composite.

### La composition géopolymère

La composition géopolymère utilisée à l'étape i) est de préférence une composition géopolymère liquide.

La composition géopolymère employée dans l'étape ii) est de préférence une composition géopolymère aluminosilicate.

La composition géopolymère de l'invention est de façon particulièrement préférée une composition géopolymère comprenant de l'eau, du silicium (Si), de l'aluminium (Al), de l'oxygène (O), et au moins un élément choisi parmi le potassium (K), le sodium (Na), le lithium (Li), le césium (Cs), et le calcium (Ca), et de préférence choisi parmi le potassium (K) et le sodium (Na).

La composition géopolymère peut en particulier comprendre au moins un premier aluminosilicate, au moins un premier silicate alcalin, de l'eau, et éventuellement une base alcaline.

### Le premier aluminosilicate

Le premier aluminosilicate peut être choisi parmi les métakaolins (i.e. kaolins calcinés), les cendres volantes (bien connues sous l'anglicisme « *fly ash* »), le laitier de haut fourneau (bien connu sous l'anglicisme « *blast furnace slag* »), les argiles gonflantes telles que la bentonite, les argiles calcinées, tout type de composé comprenant de l'aluminium et de la fumée de silice, les zéolithes, et un de leurs mélanges.

Parmi ces composés, les métakaolins sont préférés, notamment ceux commercialisés par la société Imérys.

Dans l'invention, l'expression « métakaolin » signifie un kaolin calciné ou un aluminosilicate déshydroxylé. Il est de préférence obtenu par déshydratation d'un kaolin ou d'une kaolinite.

La composition géopolymère peut comprendre de 5 à 50% en poids environ d'aluminosilicate, et de préférence de 10 à 35% en poids environ d'aluminosilicate, par rapport au poids total de la composition géopolymère.

La composition géopolymère peut comprendre en outre un deuxième aluminosilicate différent du premier aluminosilicate.

De préférence, la composition géopolymère comprend deux kaolins calcinés ayant des températures de calcination différentes.

Selon une forme de réalisation particulièrement préférée de l'invention, la composition géopolymère comprend un premier métakaolin choisi parmi les kaolins calcinés à une température T_{c1} d'au moins 650°C environ, et un deuxième métakaolin choisi parmi les kaolins calcinés à une température T_{c2} telle que T_{c2} - T_{c1} ≥ 100°C environ, au moins un premier silicate alcalin, de l'eau, et éventuellement une base alcaline. La composition géopolymère peut alors présenter des propriétés mécaniques améliorées, notamment en termes de flexibilité et de durabilité, tout en garantissant de bonnes propriétés de réaction et de résistance au feu.

Selon une forme de réalisation de l'invention, le premier métakaolin est un kaolin calciné à une température T_{c1} d'au moins 700°C environ, et de préférence d'au moins 725°C environ.

Selon une forme de réalisation préférée de l'invention, le premier métakaolin est un kaolin calciné à une température T_{c1} d'au plus 875°C environ, et de préférence d'au plus 825°C environ.

Le premier métakaolin peut comprendre au moins 20% en mole environ, et de préférence au moins 30% en mole environ d'oxyde d'aluminium (Al₂O₃), par rapport au nombre de moles total du premier métakaolin.

Le premier métakaolin peut comprendre au plus 60% en mole environ, et de préférence au plus 50% en mole environ d'oxyde d'aluminium (Al₂O₃), par rapport au nombre de moles total du premier métakaolin.

Le premier métakaolin peut comprendre au moins 35% en mole environ, et de préférence au moins 45% en mole environ d'oxyde de silicium (SiO₂), par rapport au nombre de moles total du premier métakaolin.

Le premier métakaolin peut comprendre au plus 75% en mole environ, et de préférence au plus 65% en mole environ d'oxyde de silicium (SiO₂), par rapport au nombre de moles total du premier métakaolin.

À titre d'exemples de premier métakaolin, on peut citer les métakaolins vendus par la société Imérys, notamment celui commercialisé sous la référence PoleStar^{®} 450.

Le premier métakaolin peut être choisi parmi les kaolins calcinés à T_{c1} telle que définie dans l'invention, pendant au moins 1 min environ, de préférence pendant au moins 10 min environ, de façon particulièrement préférée pendant une durée allant d'environ 30 min à 8h, et de façon plus particulièrement préférée pendant une durée allant d'environ 2h à 6h.

Le deuxième métakaolin est choisi de préférence parmi les kaolins calcinés à une température T_{c2} telle que T_{c2} - T_{c1} ≥ 150°C environ, de façon particulièrement préférée telle que T_{c2} - T_{c1} ≥ 200°C environ, et de façon plus particulièrement préférée telle que T_{c2} - T_{c1} ≥ 250°C environ.

Selon une forme de réalisation de l'invention, le deuxième métakaolin est un kaolin calciné à une température T_{c2} d'au moins 800°C environ, de préférence d'au moins 850°C environ, et de façon particulièrement préférée d'au moins 900°C environ.

Selon une forme de réalisation préférée de l'invention, le deuxième métakaolin est un kaolin calciné à une température T_{c2} d'au plus 1200°C environ, et de préférence d'au plus 1150°C environ.

Le deuxième métakaolin peut comprendre au moins 20% en mole environ, et de préférence au moins 30% en mole environ d'oxyde d'aluminium (Al₂O₃), par rapport au nombre de moles total du deuxième métakaolin.

Le deuxième métakaolin peut comprendre au plus 60% en mole environ, et de préférence au plus 50% en mole environ d'oxyde d'aluminium (Al₂O₃), par rapport au nombre de moles total du deuxième métakaolin.

Le deuxième métakaolin peut comprendre au moins 35% en mole environ, et de préférence au moins 45% en mole environ d'oxyde de silicium (SiO₂), par rapport au nombre de moles total du deuxième métakaolin.

Le deuxième métakaolin peut comprendre au plus 75% en mole environ, et de préférence au plus 65% en mole environ d'oxyde de silicium (SiO₂), par rapport au nombre de moles total du deuxième métakaolin.

À titre d'exemples de deuxième métakaolin, on peut citer les métakaolins vendus par la société Imérys, notamment celui commercialisé sous la référence PoleStar^{®} 200R.

Le deuxième métakaolin peut être choisi parmi les kaolins calcinés à T_{c2} telle que définie dans l'invention, pendant au moins 1 min environ, de préférence pendant au moins 5 min environ, de façon particulièrement préférée pendant une durée allant d'environ 10 min à 2h, et de façon plus particulièrement préférée pendant une durée allant d'environ 15 min à 1h.

Le rapport massique [premier métakaolin/deuxième métakaolin] dans la composition géopolymère va de préférence de 0,1 à 2 environ, de façon particulièrement préférée de 0,5 à 1,0 environ, et de façon plus particulièrement préférée est d'environ 1.

La composition géopolymère peut comprendre de 5 à 50% en poids environ, et de préférence de 10 à 35% en poids environ de premier et deuxième métakaolins, par rapport au poids total de la composition géopolymère.

### Le premier silicate alcalin

Le premier silicate alcalin peut être choisi parmi les silicates de sodium, les silicates de potassium, et l'un de leurs mélanges.

Les silicates alcalins commercialisés par la société Silmaco ou par la société PQ corporation sont préférés. Le premier silicate alcalin est de préférence un silicate de sodium.

Le premier silicate alcalin peut avoir un rapport molaire SiO₂/M₂O allant de 1,1 à 35 environ, de préférence de 1,3 à 10 environ, et de façon particulièrement préférée de 1,4 à 5 environ, avec M étant un atome de sodium ou de potassium, et de préférence un atome de sodium.

La composition géopolymère peut comprendre de 5 à 60% en poids environ, et de préférence de 10 à 50% en poids environ de premier silicate alcalin, par rapport au poids total de la composition géopolymère.

### Le deuxième silicate alcalin

La composition géopolymère peut comprendre en outre un deuxième silicate alcalin différent du premier silicate alcalin.

Le deuxième silicate alcalin peut être choisi parmi les silicates de sodium, les silicates de potassium, et l'un de leurs mélanges. Les silicates alcalins commercialisés par la société Silmaco ou par la société PQ Corporation sont préférés. Le deuxième silicate alcalin est de préférence un silicate de sodium.

Les premier et deuxième silicates alcalins peuvent avoir respectivement des rapports molaires SiO₂/M₂O et SiO₂/M'₂O tels que M et M', identiques, sont choisis parmi un atome de sodium et un atome de potassium, et de préférence un atome de sodium, et lesdits rapports ont des valeurs différentes, de préférence des valeurs telles que leur différence est d'au moins 0,3, de façon particulièrement préférée telles que leur différence est d'au moins 0,5, et de façon plus particulièrement préférée telles que leur différence est d'au moins 1,0.

Selon une forme de réalisation de l'invention, la composition géopolymère comprend :
- un premier silicate alcalin ayant un rapport molaire SiO₂/M₂O allant de 1,5 à 2,6 environ, et
- un deuxième silicate alcalin ayant un rapport molaire SiO₂/M'₂O supérieur à 2,6, de préférence allant de 2,8 à 4,5 environ, et de façon particulièrement préférée allant de 3,0 à 4,0 environ, étant entendu que M' est identique à M.

La composition géopolymère peut comprendre de 10 à 60% en poids environ, et de préférence de 20 à 50% en poids environ de premier et deuxième silicates alcalins, par rapport au poids total de la composition géopolymère.

Le rapport massique [premier silicate alcalin/deuxième silicate alcalin] dans la composition géopolymère va de préférence de 0,5 à 2,5, et de façon particulièrement préférée de 0,8 à 2,0.

### La base alcaline

La base alcaline peut être de l'hydroxyde de sodium, ou de l'hydroxyde de potassium, et de préférence de l'hydroxyde de sodium.

La composition géopolymère peut être exempte de base alcaline. Cela permet ainsi d'améliorer la manipulation de la composition géopolymère, en particulier lors de la préparation d'un câble.

Le rapport massique matières solides/eau dans ladite composition géopolymère détermine la cinétique de solidification lors des étapes i) à iii).

La composition géopolymère peut comprendre de 35% à 80% en poids environ, et de façon particulièrement préférée de 40% à 70% en poids environ, de matières solides (silicate alcalin(s), aluminosilicate(s) et base alcaline), par rapport au poids total de ladite composition géopolymère.

La composition géopolymère peut comprendre en outre un ou plusieurs additifs choisis parmi:
- un colorant,
- des fibres minérales, notamment choisies parmi les fibres d'alumine,
- un additif à structure polymère, notamment choisi parmi les fibres de polyoléfine telles que les fibres de polypropylène, de polyéthylène haute densité (HDPE), les aramides, et les fibres techniques de verre enduites de silicone ou d'un polymère organique de type polyéthylène ; un copolymère de styrène-butadiène (SBR) ; un copolymère de styrène-butadiène-éthylène (EBS) ; les dérivés des copolymères de styrène-éthylène, notamment ceux commercialisés par Kraton tels qu'un copolymère de styrène-éthylène-butylène-styrène (SEBS), un copolymère de styrène-butadiène-styrène (SBS), un copolymère de styrène-isoprène-styrène (SIS), un copolymère de styrène-propylène-éthylène (EPS) ou un copolymère de styrène-éthylène-propylène-styrène (SEPS) ; un copolymère d'éthylène et d'acétate de vinyle (EVA), un polyorganosiloxane réticulé (e.g. à l'aide d'un péroxyde) ; du polyéthylène éventuellement sous forme de poudre ; des lignosulfonates ; de l'acétate de cellulose ; d'autres dérivés de la cellulose ; une huile silicone de faible viscosité (e.g. de l'ordre de 12500 cPo) ; et une huile polyéthylène,
- un composé accélérant la prise en masse, notamment choisi parmi le sulfate d'aluminium, les aluns (e.g. sulfate double d'aluminium et de potassium), le chlorure de calcium, le sulfate de calcium, le sulfate de calcium hydraté, l'aluminate de sodium, le carbonate de sodium, le chlorure de sodium, le silicate de sodium, le sulfate de sodium, le chlorure de fer (III), et les lignosulfonates de sodium,
- un agent retardant la prise en masse, notamment choisi parmi l'ammonium, les métaux alcalins, les métaux alcalino-terreux, le borax, les lignosulfonates et en particulier les sels de métaux de lignosulfonates de calcium, les celluloses telles que la carboxyméthyl hydroéthyl cellulose, les lignines sulfoalkylées telles que par exemple la lignine sulfométhylée, les acides hydroxycarboxyliques, les copolymères de sels d'acide 2-acrylamido-2-méthylpropane sulfonique et d'acide acrylique ou d'acide maléique, et les sels saturés,
- une charge inerte, notamment choisi parmi le talc, les micas, les argiles déshydratées, et le carbonate de calcium,
- un amidon,
- un plastifiant de l'amidon, notamment choisi parmi un stéarate de métal, un polyéthylène glycol, un éthylène glycol, un polyol comme le glycérol, le sorbitol, le mannitol, le maltitol, le xylitol ou un oligomère de l'un de ces polyols, un sucrose comme le glucose ou le fructose, un plastifiant contenant des groupes amides, et tout type de plastifiant à base de polysaccharide(s) modifié(s),
- un dérivé de la cellulose,
- un matériau carboné expansé tel qu'un graphite expansé.

Le colorant est de préférence un colorant liquide à température ambiante (i.e. à 18-25°C).

La composition géopolymère peut comprendre de 0,01 à 15% en poids environ d'additif(s), et de préférence de 0,5 à 8% en poids environ d'additif(s), par rapport au poids total de la composition géopolymère.

### L'étape i) d'imprégnation

L'étape i) peut être effectuée manuellement ou de façon automatisée, et de préférence elle est effectuée de façon automatisée.

L'étape i) est de préférence effectuée par enduction imprégnation, et de façon particulièrement préférée par enduction pré-contrôlée.

L'étape i) peut par exemple être effectuée à l'aide d'un dispositif d'enduction tel qu'une filière d'enduction.

L'étape i) peut plus particulièrement être mise en œuvre en faisant passer le matériau fibreux non tissé dans un dispositif d'enduction tel qu'une filière d'enduction, ledit dispositif étant alimenté avec la composition géopolymère, notamment à l'aide de moyens d'alimentation tels qu'une pompe, de préférence munis de moyens de régulation du débit d'alimentation. Cela permet de distribuer directement la quantité voulue de la composition géopolymère de façon homogène sur toute la largeur désirée dudit matériau pour obtenir une imprégnation effective, suffisante et adaptée du ruban.

L'étape i) peut en particulier être une enduction du type de celle connue selon l'anglicisme « *tensioned web die coating ».*

Dans un mode de réalisation préféré de l'invention, l'étape i) d'imprégnation est réalisée à une température allant de 15°C à 90°C environ, et de façon particulièrement préférée de 20°C à 40°C environ.

### L'étape ii) de séchage

L'étape ii) met en œuvre le séchage du ruban imprégné obtenu à l'étape i) précédente.

L'étape ii) peut avantageusement être effectuée à une température d'au plus 120°C environ. Une température inférieure ou égale à 120°C, peut notamment permettre d'éviter le durcissement de la composition avant sa mise en forme sous forme de rouleau dans l'étape iii). On préfère dans ce cadre que la température à laquelle est conduite l'étape ii) soit inférieur ou égale à 115°C au plus, voire inférieure ou égale à 110°C (notamment inférieure ou égale à 107°C).

L'étape ii) peut par ailleurs être avantageusement effectuée à une température d'au moins 50°C environ. Une température supérieure ou égale à 50°C permet en effet de favoriser un séchage rapide. Si on souhaite diminuer encore le temps de séchage, l'étape (ii) peut être conduite à une température d'au moins 60°C environ, voire d'au moins 70°C, par exemple à une température supérieure ou égale à 80°C (notamment supérieure ou égale à 90°C).

L'étape ii) est de préférence effectuée à une température allant de 70 à 115°C environ, et de façon particulièrement préférée allant de 90 à 107°C environ.

L'étape ii) permet d'amener la composition géopolymère d'un état liquide à un état semi-pâteux. Typiquement, la composition géopolymère à l'issue de l'étape ii) comprend au moins une phase sous la forme d'un gel aluminosilicate.

L'étape ii) peut par exemple être effectuée à l'aide d'un ou plusieurs fours, notamment un ou plusieurs fours Infra Rouge.

### L'étape iii) de formation du rouleau à partir du ruban

Dans l'étape iii), le ruban imprégné et séché partiellement tel obtenu à l'issue de l'étape (ii) est typiquement mis en forme pour fournir un rouleau où le ruban est enroulé sur lui-même autour d'un axe perpendiculaire à son axe longitudinal.

L'enroulement du ruban dans l'étape iii) est typiquement effectué en entraînant en rotation l'extrémité du ruban (typiquement autour d'une pièce cylindrique de type tambour), ce qui entraîne le reste ruban autour de l'axe de rotation. Il est préférable de maintenir le ruban en tension avec de préférence une tension constante notamment de façon à optimiser son enroulement.

La vitesse linéaire du ruban lors de l'enroulement de l'étape (iii) est avantageusement constante, cette vitesse linéaire constante pouvant par exemple être obtenue en régulant la vitesse de rotation au moyen d'un système d'asservissement lié par exemple à une mesure de la vitesse linéaire du ruban ou de la tension du ruban.

Il se révèle également avantageux de maintenir les faces du ruban parallèles à l'axe autour duquel il est enroulé, de façon à éviter que le ruban plie, glisse, voire casse. A cet effet, le ruban peut avantageusement être guidé entre des dispositifs de guidage (galets, poulies de renvoi, par exemple, maintenant le parallélisme).

Une fois le rouleau de ruban préparé selon l'étape iii), ledit rouleau peut être facilement stocké ou transporté, et ce tout particulièrement lorsqu'il est conditionné dans un sac hermétique ou une enveloppe étanche similaire qui, en plus d'éviter la prise de la composition géopolymère entre les étapes (iii) et (i)

La préparation du rouleau utilisé dans le procédé selon l'invention est de préférence effectuée selon un mode continu. En d'autres termes, les étapes i) à iii) décrites ci-dessus sont de préférence, effectuées en continu.

Au sens de la présente description, la notion de suite d'étapes effectuées « en continu » signifie que lesdites étapes sont effectuées sur une seule ligne de production, et/ou sans étapes de repos ou de récupération. En d'autres termes, dans le procédé conforme à l'invention, il n'y a pas d'étapes intermédiaires de repos entre la distribution du matériau fibreux non tissé, et la récupération/obtention du rouleau à l'issue de l'étape (iii).

Lorsque les étapes i), ii) et iii), sont conduite en continu, elles sont typiquement mises en œuvre de façon concomitantes, en faisant circuler le matériau fibreux non tissé sur une ligne de production partant d'une réserve de matériau fibreux (délivré sous la forme d'un ruban à partir d'un distributeur tel qu'un dérouleur ou dévidoir) et finissant dans une zone de préparation du rouleau, et où chaque portion du ruban de matériau fibreux en circulation est d'abord soumis à l'étape i) dans une première zone de la ligne de production, puis soumis à à l'étape ii) dans une deuxième zone de la ligne de production, pour finalement être mis en forme de rouleau dans la zone de préparation du rouleau.

Les étapes i), ii) et iii), peuvent être mises en œuvre pour fabriquer à la suite plusieurs rouleaux l'invention. Dans ce cas, les étapes i), ii) et iii) peuvent être conduites en continu pour la préparation de chaque rouleau, avec un arrêt de la chaîne de production entre chaque rouleau, mais un procédé sans arrêt de la ligne de production peut également être envisagé, en munissant la chaîne d'un accumulateur à l'entrée et en sortie.

De préférence, l'étape i) est mise en œuvre en faisant passer le matériau fibreux non tissé sous forme de ruban dans un dispositif d'enduction alimenté avec la composition géopolymère avec un débit D (en kg/min), le distributeur délivre le matériau fibreux non tissé à une vitesse V (en km/min), avec un rapport D/V allant typiquement d'environ 20 à 50 kg de composition géopolymère / km de matériau fibreux non tissé, et de façon particulièrement préférée d'environ 25 à 40 kg de composition géopolymère / km de matériau fibreux non tissé. La quantité de composition géopolymère appliquée sur le matériau fibreux non tissée peut ainsi être facilement contrôlée par une pompe.

La vitesse V est de préférence identique à la vitesse de défilement du câble.

Le débit D peut typiquement aller de 0,5 kg/min à 1,8 kg/min environ.

La vitesse V peut typiquement aller de 20 m/min à 50 m/min environ.

Lors de l'étape ii), la transformation de l'état liquide à l'état pâteux demande une quantité importante d'énergie. L'utilisation de plusieurs fours, notamment successifs le long de la ligne de production, permet d'optimiser le séchage du ruban imprégné (en termes de temps d'exposition, vitesse V et quantité d'énergie délivrée).

Selon une forme de réalisation particulièrement préférée de l'invention, le matériau fibreux non tissé passe dans le dispositif d'enduction pour mettre en œuvre l'étape i), puis le ruban imprégné obtenu passe dans un ou plusieurs fours, de préférence dans plusieurs fours disposés successivement l'un après l'autre pour mettre en œuvre l'étape ii), puis le ruban imprégné séché partiellement est enroulé sur lui-même selon l'étape iii) pour former un rouleau qui est typiquement stocké et/ou transporté vers un autre site pour la mise en œuvre de l'étape iv).

### L'étape (iv) d'application du ruban autour du câble

Dans l'étape iv), le ruban est délivré à partir du rouleau qu'on dévide pour appliquer le ruban ainsi dévidé autour dudit câble comprenant au moins un élément électriquement conducteur allongé. Selon l'invention, l'application autour du câble du ruban imprégné et séché partiellement est typiquement effectuée par un enroulement du ruban autour du câble.

Cet enroulement du ruban autour du câble, qui vise en général à recouvrir le câble sur l'ensemble sa longueur au moyen du ruban, est typiquement effectué :
- selon l'axe longitudinal du câble, à savoir avec un enroulement du ruban autour du câble avec l'axe longitudinal du ruban parallèle à l'axe longitudinal du câble, le ruban étant alors replié autour du câble dans le sens de sa largeur (le ruban se referme alors sur le câble avec en général peu de recouvrement des faces du ruban l'une sur l'autre, typiquement avec des zones de recouvrement de de 10 à 20% environ) ; ou bien
- selon un enroulement hélicoïdal, à savoir avec un enroulement du ruban autour du câble avec l'axe longitudinal du ruban qui n'est ni parallèle ni perpendiculaire à l'axe longitudinal du câble, le ruban formant alors autour du câble une hélice (le ruban revêtant alors sur le câble avec en général peu de recouvrement des faces du ruban d'une spire de l'hélice à la suivante typiquement avec des zones de recouvrement de de 10 à 20% environ).

Avantageusement, l'enroulement est hélicoïdal dans l'étape iv).

L'étape iv) peut être effectuée manuellement ou de façon automatisée, et de préférence de façon automatisée.

Lorsque l'enroulement du ruban autour du câble est effectué selon l'axe longitudinal du câble, l'étape iv) est avantageusement mise en œuvre en faisant passer le ruban imprégné séché partiellement (dévidé à partir du rouleau) dans un dispositif de resserrement ou un dispositif de conformation de ruban amorçant son repliement autour du câble dans le sens de sa largeur (dispositif désigné dans ce qui suit par « trompette »). Le câble comprenant au moins un élément électriquement conducteur allongé passe alors également dans le dispositif de resserrement durant l'étape (i), qui permet d'enrouler en continu le ruban imprégné séché partiellement autour de l'élément électriquement conducteur allongé, ce qui permet de faciliter l'enroulement longitudinal du ruban imprégné autour du câble, et ainsi de former ladite couche composite entourant ledit élément électriquement conducteur allongé.

Lorsque l'enroulement du ruban autour du câble est hélicoïdal, l'étape iv) est avantageusement mise en œuvre en enroulant le ruban autour de l'élément électriquement conducteur allongé, avec l'axe longitudinal du ruban formant un angle typiquement entre 20 et 70° avec l'axe longitudinal du câble et en entraînant le câble en rotation et en translation pour assurer l'enroulement continu du ruban sous la forme d'une hélice autour du câble.

### La couche composite

La couche composite est de préférence une couche électriquement isolante.

Dans la présente invention, on entend par « couche électriquement isolante » une couche dont la conductivité électrique peut être d'au plus 1,10⁻⁹ S/m, et de préférence d'au plus 1.10⁻¹⁰ S/m (siemens par mètre) (à 25°C).

La couche composite est de préférence une couche retardante et/ou résistante au feu.

La couche composite présente de préférence une épaisseur allant de 0,2 à 3 mm environ, et de façon particulièrement préférée allant de 0,5 à 1 mm environ.

Lorsque l'épaisseur de la couche composite est inférieure à 0,2 mm, la protection thermique du câble obtenu selon le procédé de l'invention n'est pas suffisante.

La couche composite de l'invention est de préférence une couche rubanée (i.e. sous la forme d'un ruban ou d'une bande).

La couche composite présente de préférence une épaisseur sensiblement constante et constitue notamment une enveloppe de protection continue.

La couche composite peut en particulier comprendre 2 à 3 rubans superposés.

La couche composite de l'invention est de préférence non poreuse.

La couche composite est de préférence une couche interne dudit câble.

Selon l'invention, on entend par « couche interne », une couche qui ne constitue pas la couche la plus externe du câble.

La couche composite comprend de préférence au moins un matériau géopolymère et le matériau fibreux non tissé tel que défini dans l'invention.

### Le matériau géopolymère

Dans la présente invention, le matériau géopolymère est obtenu à partir d'une composition géopolymère telle que définie dans l'invention, de préférence par durcissement, géopolymérisation et/ou polycondensation de ladite composition géopolymère.

En particulier, la composition géopolymère telle que définie dans l'invention est apte à former ledit matériau géopolymère. Les ingrédients de la composition géopolymère peuvent donc subir une polycondensation pour former ledit matériau géopolymère. Le durcissement s'effectue par réaction interne du type polycondensation. Le durcissement n'est par exemple pas le résultat d'un simple séchage, comme c'est généralement le cas pour des liants à base de silicates alcalins.

En effet, les matériaux géopolymères résultent d'une réaction de polycondensation minérale par activation alcaline, dite géosynthèse, par opposition aux liants traditionnels hydrauliques dans lesquels le durcissement est le résultat d'une hydratation des aluminates de calcium et des silicates de calcium.

Dans la présente invention, l'expression « matériau géopolymère » signifie un matériau solide comprenant du silicium (Si), de l'aluminium (Al), de l'oxygène (O) et au moins un élément choisi parmi le potassium (K), le sodium (Na), le lithium (Li), le césium (Cs) et le calcium (Ca), et de préférence choisi parmi le potassium (K), et le sodium (Na).

Le matériau géopolymère peut être un matériau géopolymère aluminosilicate.

Le matériau géopolymère aluminosilicate peut être choisi parmi les poly(sialates) répondant à la formule (I) Mₙ(-Si-O-Al-O-)ₙ [(M)-PS] et ayant un rapport molaire Si/Al égal à 1, les poly(sialate-siloxos) répondant à la formule (II) Mₙ(-Si-O-Al-O-Si-O-)ₙ [(M)-PPS] et ayant un rapport molaire Si/Al égal à 2, les poly(sialate-disiloxos) répondant à la formule (III) Mₙ(-Si-O-Al-O-Si-O-Si-O)ₙ [(M)-PSDS] et ayant un rapport molaire Si/Al égal à 3, et d'autres poly(sialates) de rapport Si/Al > 3, les poly(sialates) précités comprenant un cation alcalin M choisi parmi K, Na, Li, Cs et l'un de leurs mélanges, et n désigne le degré de polymérisation.

Dans un mode de réalisation, le matériau géopolymère représente de 5 à 98% en poids environ, de préférence de 55 à 95% en poids environ, et de préférence encore de 65 à 90% en poids environ, par rapport au poids total de la couche composite.

Le procédé peut comprendre en outre avant l'étape i), une étape i₀) de préparation de la composition géopolymère comprenant le mélange dudit premier aluminosilicate avec ledit premier silicate alcalin, l'eau, et éventuellement la base alcaline.

L'étape i₀) est généralement effectuée à un pH élevé, notamment variant de 10 à 13.

L'étape i₀) comprend de préférence les sous-étapes suivantes :
i₀₁) une sous-étape de préparation d'une solution aqueuse du premier silicate alcalin, et
i₀₂) une sous-étape de mélange du premier aluminosilicate sous forme de poudre avec la solution aqueuse de silicate alcalin préparée à la sous-étape i₀₁) précédente.

La solution aqueuse du premier silicate alcalin peut être préparée en mélangeant du dioxyde de silicium SiO₂ ou un silicate alcalin avec une base MOH dans laquelle M est K ou Na.

Le dioxyde de silicium SiO₂ peut être choisi parmi la fumée de silice (i.e. silice pyrogénée), le quartz, et leurs mélanges.

La sous-étape i₀₁) peut être effectuée en dissolvant la base dans de l'eau, entraînant un dégagement de chaleur (réaction exothermique), puis en ajoutant la silice (ou le silicate alcalin). La chaleur dégagée accélère alors la dissolution de la silice (ou du silicate alcalin) lors de la sous-étape i₀₁), et du premier aluminosilicate lors de la sous-étape i₀₂).

Lorsque le deuxième aluminosilicate et/ou le deuxième silicate alcalin tel(s) que défini(s) dans l'invention existe(nt), l'étape i₀) de préparation de la composition géopolymère peut comprendre le mélange dudit premier aluminosilicate et éventuellement dudit deuxième aluminosilicate, avec ledit premier silicate alcalin, éventuellement ledit deuxième silicate alcalin, de l'eau, et éventuellement la base alcaline.

L'étape i₀) comprend de préférence le mélange des premier et deuxième métakaolins, avec le premier silicate alcalin et éventuellement le deuxième silicate alcalin, de l'eau, et éventuellement une base alcaline.

Les premier et deuxième métakaolins et les premier et deuxième silicates alcalins sont tels que définis dans l'invention.

Selon une forme de réalisation préférée, l'étape i₀) comprend les sous-étapes suivantes :
i₀ₐ) le mélange des premier et deuxième silicates alcalins, notamment sous agitation,
i_{0b}) éventuellement l'ajout d'une base alcaline, notamment en maintenant l'agitation, et
i_{0c}) l'ajout des premier et deuxième métakaolins, notamment en maintenant l'agitation.

À l'issue de l'étape i₀), ou de la sous-étape i₀₂) ou i_{0c}), on obtient préférentiellement une solution fluide et homogène.

À l'issue de l'étape i₀), la composition géopolymère peut comprendre de 35% à 80% en poids environ, et de façon particulièrement préférée de 40% à 70% en poids environ, de matières solides (silicate alcalin(s), aluminosilicate(s) et base alcaline), par rapport au poids total de ladite composition géopolymère.

Un tel rapport massique permet d'avoir une composition géopolymère assez fluide pour permettre sa manipulation, et dont la cinétique de solidification est assez lente pour permettre la formation d'une couche de câble telle que définie ci-après.

Le rapport massique matières solides/eau dans ladite composition géopolymère peut permettre de déterminer la cinétique de solidification de ladite composition géopolymère.

Après l'étape i₀) de préparation de la composition géopolymère, et avant l'étape i) d'imprégnation, la composition géopolymère peut être chauffée, notamment à une température allant de 55°C à 95°C environ, et de façon particulièrement préférée de 70°C à 90°C environ. Cela permet ainsi de faciliter l'étape i).

Le procédé peut comprendre en outre après l'étape iv), une étape v) d'application d'une gaine externe de protection autour de la couche composite. La gaine externe de protection peut permettre d'assurer l'intégrité mécanique du câble.

À l'issue de l'étape v), le câble peut alors comprendre au moins un élément électriquement conducteur allongé, la couche composite entourant ledit élément électriquement conducteur allongé, et au moins une gaine externe de protection entourant ladite couche composite.

L'étape v) est de préférence effectuée par extrusion, notamment à une température allant de 140°C à 195°C environ.

L'étape v) peut par exemple être effectuée à l'aide d'une extrudeuse.

Dans ce mode de réalisation, une tête d'extrusion peut être positionnée à la sortie du dispositif de conformation tel que défini dans l'invention.

La gaine externe de protection est de préférence la couche la plus externe du câble.

La gaine externe de protection est de préférence une couche électriquement isolante.

La gaine externe de protection est de préférence réalisée en un matériau exempt d'halogène. Elle peut être réalisée classiquement à partir de matériaux retardant la propagation de la flamme ou résistant à la propagation de la flamme. Notamment, si ces derniers ne contiennent pas d'halogène, on parle de gainage de type HFFR (pour l'anglicisme « *Halogen Free Flame Retardant »*).

La gaine externe de protection peut comprendre au moins un polymère organique ou inorganique.

Le choix du polymère organique ou inorganique n'est pas limitatif et ceux-ci sont bien connus de l'homme du métier.

Selon une forme de réalisation préférée de l'invention, le polymère organique ou inorganique est choisi parmi les polymères réticulés et non réticulés.

Le polymère organique ou inorganique peut être un homo- ou un co-polymère ayant des propriétés thermoplastiques et/ou élastomères.

Les polymères inorganiques peuvent être des polyorganosiloxanes.

Les polymères organiques peuvent être des polyuréthanes ou des polyoléfines.

Les polyoléfines peuvent être choisies parmi les polymères d'éthylène et de propylène. A titre d'exemple de polymères d'éthylène, on peut citer le polyéthylène linéaire basse densité (LLDPE), le polyéthylène basse densité (LDPE), le polyéthylène moyenne densité (MDPE), le polyéthylène haute densité (HDPE), les copolymères d'éthylène et d'acétate de vinyle (EVA), les copolymères d'éthylène et d'acrylate de butyle (EBA), d'acrylate de méthyle (EMA), de 2-hexyléthyl acrylate (2HEA), les copolymères d'éthylène et d'alpha-oléfines tels que par exemple les polyéthylène-octène (PEO), les copolymères d'éthylène et de propylène (EPR), les terpolymères d'éthylène et de propylène (EPT) tels que par exemple les terpolymères d'éthylène propylène diène monomère (EPDM) ou un de leurs mélanges.

Le polymère de la gaine externe de protection est de préférence un polymère organique, de préférence encore un polymère d'éthylène, et de préférence encore un copolymère d'éthylène et d'acétate de vinyle, un polyéthylène linéaire basse densité, ou un de leurs mélanges.

La gaine externe de protection peut comprendre en outre une charge minérale ignifugeante hydratée. Cette charge minérale ignifugeante hydratée agit principalement par voie physique en se décomposant de manière endothermique (e.g. libération d'eau), ce qui a pour conséquence d'abaisser la température de la gaine et de limiter la propagation des flammes le long du câble. On parle notamment de propriétés de retard à la flamme, bien connues sous l'anglicisme « *flame retardant ».*

La charge minérale ignifugeante hydratée peut être un hydroxyde métallique tel que l'hydroxyde de magnésium ou le trihydroxyde d'aluminium.

La gaine externe de protection peut comprendre en outre une charge inerte, notamment choisi parmi le talc, les micas, les argiles déshydratées et un de leurs mélanges.

Avantageusement, le câble obtenu selon un procédé conforme à l'invention satisfait à au moins une des normes de réaction ou non-propagation au feu choisies parmi les normes EN 60332-1, EN 60332-3, et EN 50399 (2012/02 + A1 2016) ; et de préférence à la norme EN 50399 (2012/02 + A1 2016), en particulier aux critères de classification B2ca, s1a, d0, a1 de ladite norme, et éventuellement aux normes EN 60332-1 et EN 60332-3.

Selon une forme de réalisation de l'invention, le câble est un câble d'énergie et/ou de télécommunication, et de préférence un câble électrique.

Lorsque le câble comprend une pluralité d'éléments électriquement conducteurs allongés, la couche composite peut alors entourer la pluralité d'éléments électriquement conducteurs allongés du câble.

Le câble peut comprendre une seule couche composite telle que définie dans l'invention ou une pluralité de couches composites telles que définies dans l'invention.

Lorsque le câble comprend une pluralité de couches composites, le procédé peut typiquement comprendre la réitération de l'étape iv), autant de fois qu'il y a de couches composites à appliquer (avec le cas échéant des rouleaux de rubans identiques ou différents pour chacune des couches réalisées), puis éventuellement l'étape v) telle que définie dans l'invention.

De préférence, le câble comprend une seule couche composite, et de façon plus particulièrement préférée une seule couche composite interne, à savoir que ladite couche composite ne constitue pas la couche la plus externe du câble, ce qui correspond typiquement à la mise en œuvre d'une seule étape iv) suivie d'une seule étape v).

De façon préférentielle, l'étape (iv) (ou les étapes (iv) lorsqu'on en met en œuvre plusieurs successives) et l'étape (v) sont conduites selon un mode continu. Selon ce mode de réalisation, il n'y a pas d'étapes intermédiaires de repos entre la distribution du matériau fibreux non tissé à partir du rouleau de ruban imprégné et séché partiellement et la récupération/obtention du câble final.

Lorsque les étapes iv) et v), sont conduites en continu, elles sont typiquement mises en œuvre de façon concomitantes, en faisant circuler le ruban imprégné et séché partiellement déroulé à partir du rouleau sur une ligne de production partant du rouleau et où chaque portion du ruban de matériau fibreux en circulation est d'abord soumis au moins une fois à l'étape iv) dans une première zone de la ligne de production, puis avantageusement soumis à l'étape v) dans une deuxième zone de la ligne de production, pour former un câble selon l'invention.

Selon une forme de réalisation particulière de l'invention, le câble obtenu selon le procédé de l'invention comprend en outre un ou plusieurs couches interposées entre l'élément électriquement conducteur allongé et la couche composite telle que définie dans l'invention.

Ces couches peuvent comprendre une ou plusieurs couches polymères telles que des couches polymères électriquement isolantes, et/ou une ou plusieurs couches métalliques telles que des couches métalliques contenant une ou plusieurs ouvertures.

Dans ce cas, le procédé comprend en outre, avant l'étape iv), une ou plusieurs étapes d'application d'une ou plusieurs des couches mentionnées ci-dessus, autour de l'élément électriquement conducteur allongé, de l'ensemble des éléments électriquement conducteurs allongés, ou autour de chacun des éléments électriquement conducteurs allongés, selon le type de câble souhaité.

Les couches métalliques contenant une ou plusieurs ouvertures sont typiquement des couches utilisées dans des câbles rayonnants bien connus de l'homme du métier.

Selon un mode de réalisation préféré de l'invention, le câble comprend :
- une pluralité d'éléments électriquement conducteurs, chacun desdits éléments électriquement conducteurs étant entouré par une couche polymère, notamment électriquement isolante, pour former une pluralité d'éléments électriquement conducteurs isolés,
- une couche composite telle que définie dans l'invention entourant ladite pluralité d'éléments électriquement conducteurs isolés, et
- une gaine externe de protection, notamment électriquement isolante, entourant ladite couche composite.

Le procédé conforme à l'invention est rapide, simple et avantageux d'un point de vue économique. Il permet de fabriquer en peu d'étapes un câble présentant de bonnes propriétés mécaniques, notamment en termes de flexibilité et de durabilité, tout en garantissant une bonne performance de résistance au feu.

### Brève description des dessins

Les dessins annexés illustrent un mode de réalisation possible de l'invention :
[Fig. 1] La Figure 1 représente une vue schématique d'un dispositif mettant en œuvre un procédé conforme à l'invention.
[Fig. 2] La Figure 2 représente une vue schématique d'un câble électrique tel qu'il peut être obtenu selon le procédé conforme à l'invention.

Pour des raisons de clarté, seuls les éléments essentiels pour la compréhension de l'invention ont été représentés de manière schématique sur les figures, sans respect de l'échelle.

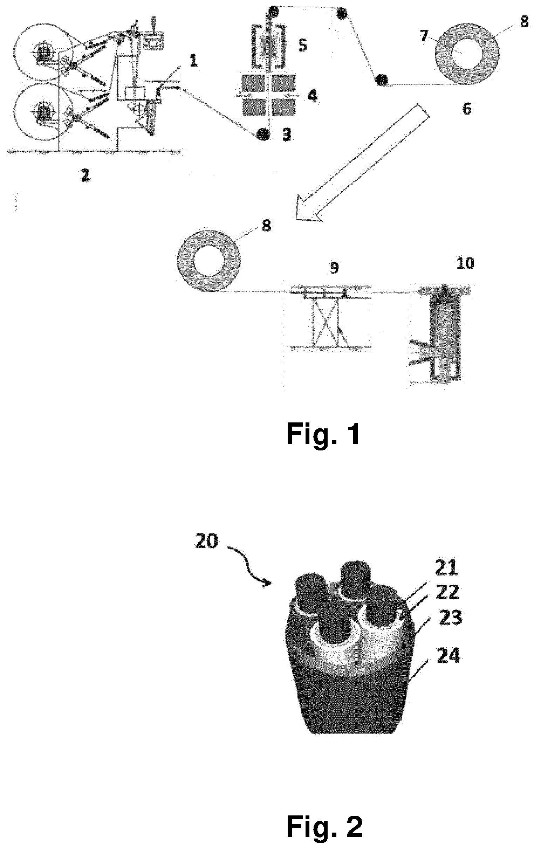

La **Figure 1** est une illustration schématique d'un procédé conforme à l'invention, correspondant à un mode de mise en œuvre continu des étapes de fabrication du rouleau de ruban imprégné et séché partiellement, suivi d'un mode de mise en œuvre continu des étapes de fabrication du câble à partir du rouleau.

Sur la Figure 1 est représenté un matériau fibreux non tissé 1 sous la forme d'un ruban placé sur un distributeur 2, ledit matériau sous forme de ruban étant déroulé et amené depuis ce distributeur sur une ligne de production continue du rouleau, qui contient les éléments suivants, traversés successivement par le ruban : le ruban en mouvement traverse tout d'abord une filière d'enduction 3 alimentée avec une composition géopolymère 4, afin de permettre l'imprégnation du matériau 1 par ladite composition 4 [selon l'étape i) de l'invention]. La filière d'enduction 3 est typiquement reliée à une pompe non représentée sur le schéma, avantageusement associée à des moyens de régulation du débit délivré de composition 4. Le ruban imprégné sortant de la filière d'enduction 3 traverse ensuite un four 5 (ou plus avantageusement une succession de fours, selon un mode non représenté sur la Figure), afin de permettre son séchage [selon l'étape ii) de l'invention]. Le ruban imprégné séché partiellement sortant du four est ensuite entraîné vers un enrouleur 6 comprenant un axe cylindrique 7 entraîné en rotation par un moteur non représenté sur la figure. Le ruban s'enroule dans le sens de sa longueur autour de la génératrice de ce cylindre, pour former un rouleau 8 imprégné et séché partiellement selon l'invention, de forme sensiblement cylindrique autour de l'axe servant d'âme centrale au rouleau. L'enroulement du ruban autour de l'axe 7 est par ailleurs à l'origine du mouvement global imprimé au ruban, qui permet la mise en œuvre en continu des étapes (i), (ii) et (iii) en entrainant le ruban du distributeur vers l'enrouleur.

Le procédé peut être conduit pour imprégner et sécher la totalité du ruban délivré par le distributeur 2 et en constituer un rouleau, ou bien, alternativement, pour préparer au moins un rouleau de ruban imprégné et séché partiellement à partir de seulement une partie du ruban délivré. Une fois qu'un rouleau de taille souhaitée est obtenu, il est typiquement retiré de l'enrouleur (généralement en sectionnant le ruban à l'entrée de l'enrouleur) puis avantageusement conditionné dans un sac hermétique.

La flèche représentée sur la Figure 1 représente le stockage et/ou le transfert du rouleau 8 obtenu, typiquement vers un autre site que celui mettant en œuvre les étape i) à iii).

Le rouleau 8 est ensuite utilisé pour réaliser un câble selon les étapes iv) et v) de l'invention conduites selon un mode continu.

Pour ce faire, le ruban imprégné séché partiellement est dévidé à partir du rouleau ensuite amené dans un dispositif de resserrement 9 conjointement avec un câble comprenant un élément électriquement conducteur allongé qui est parallèle à l'axe longitudinal du ruban et situé au centre du dispositif de resserrement. Le dispositif de resserrement induit alors un repliement du ruban sur lui-même dans le sens de sa largeur, ce par quoi il vient emprisonner le câble sur sa longueur en formant ainsi une couche composite entourant ledit élément électriquement conducteur allongé [selon l'étape iv)]. Le câble ainsi obtenu passe au travers d'une tête d'extrusion 10 pour former une gaine externe de protection [selon étape v)].

La Figure 2 est une représentation schématique d'un câble électrique 10, correspondant à un câble électrique résistant au feu de type K25 ou RZ1K.

Ce câble électrique 20 comprend quatre éléments électriquement conducteurs allongés 21, chacun étant isolé avec une couche électriquement isolante 22, et, successivement et coaxialement autour de ces quatre éléments électriquement conducteurs allongés isolés, une couche composite 23 telle que définie dans l'invention entourant les quatre éléments électriquement conducteurs allongés isolés, et une gaine externe 24 de type HFFR entourant la couche composite 23 telle que définie dans l'invention, et se présente avantageusement sous la forme d'un ruban.

Les exemples ci-après, réalisés sur des lignes de productions correspondant à celles illustrées sur la Figure 1, illustrent un mode de réalisation possible de la présente invention.

### EXEMPLES

Les matières premières utilisées dans les exemples, sont listées ci-après :
- solution aqueuse d'un premier silicate de sodium à 50% en poids environ de type *« waterglass* », Simalco, silicate de sodium de rapport molaire SiO₂/Na₂O de 2,0 environ,
- solution aqueuse d'un deuxième silicate de sodium à 38% en poids environ de type *« waterglass* », Simalco, silicate de sodium de rapport molaire SiO₂/Na₂O de 3,4 environ,
- premier métakaolin, PoleStar^{®} 450, Imerys, de rapport molaire Al₂O₃/SiO₂ de 41/55 (i.e. de 0,745 environ), kaolin calciné à une température de 1000°C environ,
- deuxième métakaolin, PoleStar^{®} 200R, Imerys, de rapport molaire Al₂O₃/SiO₂ de 41/55 (i.e. de 0,745 environ), kaolin calciné à une température de 700°C environ, et
- matériau non tissé en Polyester, GT320, GECA TAPES.

Sauf indications contraires, toutes ces matières premières ont été utilisées telles que reçues des fabricants.

### Exemple 1

### Préparation d'un rouleau de ruban imprégné selon l'invention

Une composition géopolymère a été utilisée dans cet exemple, qui a été préparée de la façon suivante : une solution aqueuse de silicates alcalins a été préparée en mélangeant 40 g d'une solution aqueuse à 50% en poids d'un premier silicate de sodium et 40 g d'une solution aqueuse à 38% en poids d'un deuxième silicate de sodium. Puis, 10 g d'un premier métakaolin et 10 g d'un deuxième métakaolin ont été mélangés avec la solution aqueuse de silicates alcalins. La composition géopolymère comprend 55,2% en poids environ de matières solides, par rapport au poids total de ladite composition géopolymère.

La composition a été utilisée dans les conditions suivantes :
Un matériau fibreux non tissé en polyester sous la forme d'un ruban (largeur : 40 mm ; épaisseur : 450 µm ; longueur 650 m) est dévidé en continu à partir d'un distributeur, avec une vitesse de 50 m/min environ, le ruban passe sur une ligne de production telle qu'illustrée sur la figure 1, et passe d'abord par une filière d'enduction alimenté avec ladite composition géopolymère à l'aide d'une pompe délivrant un débit constant de 1,5 kg/min, afin de permettre l'imprégnation du matériau fibreux non tissé par la composition géopolymère. La composition géopolymère a une température de 40°C environ.

Le ruban imprégné passe ensuite dans trois fours successifs en série : un premier four IR fonctionnant à une température de 800°C, puis dans un deuxième four IR fonctionnant également à une température de 800°C connecté immédiatement au premier, et enfin à nouveau dans un troisième four IR fonctionnant lui aussi à une température de 800°C, et connecté immédiatement au deuxième four, ce qui permettre le séchage du ruban imprégné.

En fin de ligne de production, le ruban imprégné et séché partiellement est enroulé sur lui-même dans le sens de la longueur pour former un rouleau sensiblement cylindrique dont la hauteur selon la génératrice est égale à l'épaisseur du ruban. L'enroulement est effectué en enroulant le ruban autour d'un support cylindrique en carton.

Le rouleau obtenu est conditionné dans un sac hermétique propre à un stockage de longue durée, voire à un transport sur de longues distances.

### Exemple 2

### Préparation d'un câble résistant au feu selon l'invention

Le rouleau de ruban imprégné séché partiellement obtenu dans l'exemple 1 a été utilisé comme source de ruban dans cet exemple, dans les conditions ci-après.

Le ruban imprégné et séché partiellement, dévidé à partir du rouleau, a été amené dans un dispositif de resserrement au travers duquel défile un câble basse tension, les axes longitudinaux du câble et du ruban étant parallèle, ce par quoi est obtenu l'enroulement du ruban imprégné autour du câble, le ruban s'enroulant dans le sens de la largeur et venant envelopper le câble. Le câble comprend 5 conducteurs en cuivre de section 1,5 mm², chacun des conducteurs étant entouré avec une couche électriquement isolante à base de XLPE. À l'issue de l'étape d'application du ruban imprégné autour du câble, une couche composite entourant les conducteurs isolés est obtenue.

La couche composite ainsi formée a une épaisseur de 0,5 mm.

L'assemblage obtenu est ensuite recouvert par extrusion à chaud d'une gaine protectrice polymère à base d'un mélange HFFR produit par NEXANS à base de polyéthylène et de charges ignifugeantes, ladite gaine ayant une épaisseur de 2 mm environ. On a ainsi obtenu un câble conforme à l'invention. Les performances à la flamme du câble sont déterminées suivant la norme EN50399. 15 tronçons de câble positionnés sur une échelle verticale sont exposés à une flamme 20kW de puissance pendant 20 min.

Les résultats sont reportés dans le tableau 1 ci-dessous :
[Tableau 1]

**TABLEAU 1**

| **Paramètres de performances** | **Valeurs** | **Classe selon EN50399** |
|---|---|---|
| pHBR (kW) | 13,8 | B2 |
| Temps au pic HRR (s) | 912 | |
| THR (MJ) | 5,2 | |
| FIGRA (w/s) | 23,6 | |
| propapation de la flamme (m) | 0,56 | |
| Gouttelettes enflammées | Aucune | d0 |
| SPR (m²/s) | 0,03 | si |
| Temps au pic SPR (s) | 876 | |
| TSP (m²) | 28,12 | |

Dans ce tableau, l'acronyme HRR correspond à l'expression anglophone « Heat Release Rate » qui renseigne sur le débit calorifique, l'acronyme THR correspond à l'expression anglophone « Total Heat Release » qui renseigne sur la quantité de chaleur dégagée lors de la combustion, l'acronyme FIGRA correspond à l'expression anglophone « Flre GRowth rAte » qui renseigne sur la vitesse de croissance du feu, l'acronyme SPR correspond à l'expression anglophone « Smoke Production Rate » qui renseigne sur la vitesse de production de fumée, et l'acronyme TSP correspond à l'expression anglophone « Total Smoke Production » qui renseigne sur la quantité totale de fumée produite.

Ces résultats démontrent que le câble conforme à l'invention présente les propriétés de protection au feu maximales au regard des exigences de la norme Européenne EN50399.

## Revendications

1. Procédé de fabrication d'un câble comprenant au moins un élément électriquement conducteur allongé et au moins une couche composite entourant ledit élément électriquement conducteur allongé, **caractérisé en ce que** la couche composite entourant ledit élément électriquement conducteur allongé est formée en appliquant autour dudit câble un ruban de matériau fibreux imprégné avec une composition géopolymère, et où ledit ruban imprégné et séché est délivré à partir d'un rouleau préparé selon étapes suivantes :
i) imprégner un matériau fibreux non tissé avec une composition géopolymère, afin de former un ruban imprégné de ladite composition géopolymère,
ii) traiter thermiquement le ruban imprégné obtenu à l'étape i), afin de former un ruban imprégné et séché partiellement, et
iii) former le rouleau en enroulant sur lui-même le ruban imprégné et séché partiellement issu de l'étape (ii).

2. Procédé selon la revendication 1, **caractérisé en ce que** le matériau fibreux non tissé est choisi parmi les matériaux cellulosiques, les matériaux à base de polymères organiques synthétiques, les fibres de verre, et un de leurs mélanges.

3. Procédé selon la revendication 1 ou 2, **caractérisé en ce que** les matériaux à base de polymères organiques synthétiques sont choisis parmi les matériaux polymères à matrice poreuse et/ou fibreuse de polyoléfine(s), en particulier ceux choisis parmi les homo- et copolymères de propylène, les homo- et copolymères d'éthylène, les polyéthylènes haute densité (HDPE), les polyamides aromatiques (aramides), les polyesters, et un de leurs mélanges.

4. Procédé selon l'une quelconque des revendications précédentes, **caractérisé en ce que** le matériau fibreux non tissé est un polyéthylène téréphtalate.

5. Procédé selon l'une quelconque des revendications précédentes, **caractérisé en ce que** le matériau fibreux non tissé présente un grammage allant de 50 à 120 g/cm².

6. Procédé selon l'une quelconque des revendications précédentes, **caractérisé en ce que** le matériau fibreux non tissé représente de 2 à 95% en poids, de préférence de 5 à 45% en poids, et plus préférentiellement de 10 à 35% en poids, par rapport au poids total de la couche composite.

7. Procédé selon l'une quelconque des revendications précédentes, **caractérisé en ce que** la composition géopolymère est une composition géopolymère aluminosilicate.

8. Procédé selon l'une quelconque des revendications précédentes, **caractérisé en ce que** la composition géopolymère comprend de l'eau, du silicium (Si), de l'aluminium (Al), de l'oxygène (O), et au moins un élément choisi parmi le potassium (K), le sodium (Na), le lithium (Li), le césium (Cs), et le calcium (Ca), et de préférence parmi le potassium et le sodium (Na).

9. Procédé selon l'une quelconque des revendications précédentes, **caractérisé en ce que** l'étape i) est mise en œuvre en faisant passer le matériau fibreux non tissé dans un dispositif d'enduction alimenté avec la composition géopolymère, à l'aide de moyens d'alimentations de préférence munis de moyens de régulation du débit d'alimentation.

10. Procédé selon l'une quelconque des revendications précédentes, **caractérisé en ce que** l'étape ii) est effectuée à une température d'au plus 120°C.

11. Procédé selon l'une quelconque des revendications précédentes, **caractérisé en ce que** l'étape ii) est effectuée à une température d'au moins 50°C.

12. Procédé selon l'une quelconque des revendications précédentes, **caractérisé en ce que** l'application du ruban imprégné séché partiellement autour d'un câble comprenant au moins un élément électriquement conducteur allongé est effectuée par un enroulement du ruban imprégné séché partiellement autour du câble, effectué selon l'axe longitudinal du câble.

13. Procédé selon l'une quelconque des revendications précédentes, **caractérisé en ce que** l'application du ruban imprégné séché partiellement autour d'un câble comprenant au moins un élément électriquement conducteur allongé est effectuée par un enroulement du ruban imprégné séché partiellement autour du câble, effectué selon un enroulement hélicoïdal.

14. Rouleau de ruban imprégné et séché partiellement
comportant un ruban de matériau fibreux imprégné avec une composition géopolymère et séché partiellement, ledit ruban imprégné et séché partiellement étant enroulé sur lui-même autour d'un axe perpendiculaire à son axe longitudinal.

15. Rouleau selon la revendication 14, se présentant sous la
forme d'un ensemble comprenant un support autour duquel le ruban est entouré sur lui-même.
